# EUROPEAN PATENT SPECIFICATION

(11) **EP 3 872 111 B1**
(45) Date of publication and mention of the grant of the patent: **28.08.2024**
(21) Application number: 19876963.0
(22) Date of filing: 08.10.2019
(51) Int. Cl.: C08G 18/67, C08J 5/04, C08G 18/04, C08G 18/76, C08G 18/79, C08K 7/06, C08K 3/04

(54) **MOLDING RESIN COMPOSITION, FIBER-REINFORCED MOLDING MATERIAL, AND MOLDED ARTICLE THEREFROM**
FORMHARZZUSAMMENSETZUNG, FASERVERSTÄRKTES FORMMATERIAL UND DARAUS GEFORMTER ARTIKEL
COMPOSITION DE RÉSINE DE MOULAGE, MATÉRIAU DE MOULAGE RENFORCÉ PAR DES FIBRES ET ARTICLE MOULÉ À PARTIR DE CELUI-CI

(30) Priority: 24.10.2018 JP 2018200031; 07.11.2018 JP 2018209709; 13.02.2019 JP 2019023547
(43) Date of publication of application: 01.09.2021
(73) Proprietor: DIC Corporation, Tokyo 174-8520 (JP)
(72) Inventor: FUJITA, Yukiko, Takaishi-shi, Osaka 592-0001 (JP)
(74) Representative: TBK
(86) International application number: PCT/JP2019/039600
(87) International publication number: WO 2020/085075

(56) References cited:
- WO-A1-2013/018237
- WO-A1-2018/070076
- JP-A- 2005 247 879
- JP-A- 2005 247 879
- JP-A- 2009 019 099
- JP-A- 2009 019 099
- JP-A- 2015 021 091
- US-A- 4 296 215
- US-A1- 2014 148 531

## Description

### Technical Field

The present invention relates to a molding resin composition, a fiber-reinforced molding material, and a molded article made therefrom.

### Background Art

A fiber-reinforced resin composite material made of a thermosetting resin, such as an epoxy resin or an unsaturated polyester resin, reinforced with a reinforcing fiber, such as carbon fiber, has attracted attention because of its characteristics of being light in weight but having high heat resistance and high mechanical strength. Such a fiber-reinforced resin composite material has been increasingly used in various structural applications, such as bodies or various parts of automobiles and aircrafts. One of methods for molding such a fiber-reinforced resin composite material containing an epoxy resin is an autoclave method. The autoclave method involves heating and curing a material called a prepreg in an autoclave capable of pressurizing the material. One of methods for molding a material containing an unsaturated polyester resin is a method for curing and molding an intermediate material called a sheet molding compound (SMC) or a bulk molding compound (BMC) by means of press molding, injection molding, or other methods. In recent years, materials with high productivity have been actively being developed.

Such a molding material is, for example, a carbon fiber-reinforced sheet-shaped molding material containing an unsaturated polyester, a vinyl monomer, a thermoplastic polymer, a polyisocyanate, a filler, conductive carbon black, and a wide carbon fiber bundle as essential components (see PTL 1). This molding material provides a molded article having good appearance but has a problem of volatile organic compounds, such as formaldehyde, emitted from the molded article when being used as interior parts of cars, rooms, or other spaces.

US 4 296 215 A relates to thermoset resin compositions which have a molecular weight of at least 500 which are thickened by the addition of a polyfunctional isocyanate and a trimerization catalyst, wherein the thickened compositions can be cured by a free radical catalyst and the application of heat and/or pressure and a variety of reinforced articles can be produced from the thickened compositions.

US 2014/148531 A1 relates to a fibre-matrix material curable thermally by radical polymerization, comprising a polymeric matrix curable thermally by radical polymerization, at least one kind of reinforcing fibres and at least one particulate initiator of the radical polymerization, having an average particle size of 5 nm to 500 um, as measured by static light scattering, and selected from the group consisting of benzpinacol and substituted benzpinacols.

WO 2018/070076 A1 relates to a fiber-reinforced molding material containing the following as essential raw materials: a vinyl ester that is a reaction product of (meth)acrylic acid and an epoxy resin having an epoxy equivalent weight in the range of 180-500; an unsaturated monomer having a flash point of 100°C or more; a polyisocyanate; a polymerization initiator; and carbon fibers having a fiber length of 2.5-50 mm. JP 2009-019099 A relates to a resin composition for a fiber-reinforced composite material which comprises, based on 100 parts by mass of a resin containing a radically polymerizable unsaturated group and an epoxy group, >0 to 200 parts by mass of a reactive diluent selected from a radically polymerizable monomer and an epoxy compound, 0.5-5 parts by mass of a peroxide hardener, 5-10 parts by mass of an epoxy hardener, and 0.5-10 parts by mass of a 2-15C carboxylic acid compound.

JP 2005-247879 A relates to a composition for a fiber-reinforced composite material which comprises 100 parts by mass of a resin or mixed resin containing a radically polymerizable unsaturated group and an epoxy group, 0-200 parts by mass of a radically polymerizable monomer and/or an epoxy diluent, 0.5-200 parts by mass of a curing agent, 5-2,000 parts by mass of a reinforced fiber and 0-200 parts by mass of a thickener.

### Citation List

### Patent Literature

PTL 1: Japanese Unexamined Patent Application Publication No. 2009-13306

### Summary of Invention

### Technical Problem

An object of the present invention is to provide a molding resin composition that provides a molded article having good physical properties, such as high flexural strength, and emitting less volatile organic compounds, such as formaldehyde, and to provide a fiber-reinforced molding material and a molded article made from the fiber-reinforced molding material.

### Solution to Problem

The inventors of the present invention have found that a molding resin composition containing a vinyl ester, an unsaturated monomer, a polyisocyanate, and a particular polymerization initiator as essential materials provides a molded article that has good physical properties, such as high flexural strength, and emits less volatile organic compounds, such as formaldehyde, completing the present invention.

Specifically, the present invention relates to a molding resin composition containing a vinyl ester (A), an unsaturated monomer (B), a polyisocyanate (C), and a polymerization initiator (D) as essential materials, wherein the polymerization initiator (D) is at least one compound selected from the group consisting of compounds (D1) represented by general formula (1), benzopinacol or its ester compounds (D2), and compounds (D3) having an azo group, wherein the epoxy equivalent weight of the vinyl ester (A) is 4000 or more, and to a fiber-reinforced molding material and a molded article made from the fiber-reinforced molding material. 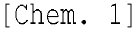 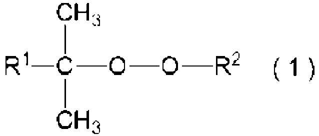 (in general formula (1), R¹ represents an aryl group, and R² represents a hydrogen atom, an alkyl group, or an arylalkyl group.)

### Advantageous Effects of Invention

Since a molded article made from the fiber-reinforced molding material of the present invention has good properties such as high flexural strength and emits less volatile organic compounds, the molded article can be suitably used as automotive parts, railway vehicle parts, aerospace craft parts, ship parts, housing equipment parts, sports equipment parts, parts for light vehicles, parts for construction and civil engineering, bodies of OA equipment and other equipment, and other applications.

### Description of Embodiments

A molding resin composition of the present invention includes a vinyl ester (A), an unsaturated monomer (B), a polyisocyanate (C), and a polymerization initiator (D) as essential materials, wherein the polymerization initiator (D) is at least one compound selected from the group consisting of compounds (D1) represented by general formula (1), benzopinacol or its ester compounds (D2), and compounds (D3) having an azo group, wherein the epoxy equivalent weight of the vinyl ester (A) is 4000 or more. 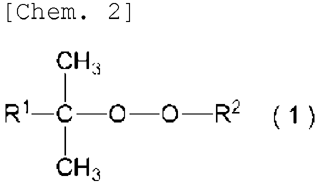 (in general formula (1), R¹ represents an aryl group, and R² represents a hydrogen atom, an alkyl group, or an arylalkyl group.)

The vinyl ester (A) is produced by the reaction between an epoxy resin (a1) and (meth)acrylic acid (a2). The epoxy equivalent of the epoxy resin (a1) is preferably in the range of 135 to 500, more preferably in the range of 175 to 400, in order to improve the balance between fluidity and ease of handling, such as film releasability and tackiness, during molding.

In the present invention, the term "(meth)acrylic acid" refers to one or both of acrylic acid and methacrylic acid, and the term "(meth)acylate" refers to one or both of "acylate" and "methacrylate".

The molar ratio (COOH/EP) of the carboxyl group (COOH) of the (meth)acrylic acid (a2) to the epoxy group (EP) of the epoxy resin (a1) is preferably in the range of 0.85 to 1.1 in order to improve the mechanical properties, such as strength and heat resistance, of a molded article.

Examples of the epoxy resin (a1) include a bisphenol A-type epoxy resin, a bisphenol F-type epoxy resin, a bisphenol E-type epoxy resin, a bisphenol S-type epoxy resin, a bisphenol sulfide-type epoxy resin, a phenylene ether-type epoxy resin, a naphthylene ether-type epoxy resin, a biphenyl-type epoxy resin, a tetramethyl biphenyl-type epoxy resin, a polyhydroxynaphthalene-type epoxy resin, a phenol novolac-type epoxy resin, a cresol novolac-type epoxy resin, a triphenylmethane-type epoxy resin, a tetraphenylethane-type epoxy resin, a dicyclopentadiene-phenol addition reaction-type epoxy resin, a phenol aralkyl-type epoxy resin, a naphthol novolac-type epoxy resin, a naphthol aralkyl-type epoxy resin, a naphthol-phenol co-condensation novolac-type epoxy resin, a naphthol-cresol co-condensation novolac-type epoxy resin, a naphthalene ether-type epoxy resin, an aromatic hydrocarbon formaldehyde resin-modified phenolic resin-type epoxy resin, a biphenyl-modified novolac-type epoxy resin, and an anthracene-type epoxy resin. Among these, bifunctional aromatic epoxy resins are preferred, and a bisphenol A-type epoxy resin and a bisphenol F-type epoxy resin are more preferred in order to improve the strength of the molded article, the ease of handling of the molding material, and the fluidity of the molding material during molding. These epoxy resins may be used alone or in combination of two or more. When two or more epoxy resins are used in combination, the epoxy equivalent of the epoxy resin (a1) is the average epoxy equivalent of all the epoxy resins.

To adjust the epoxy equivalent, the molecular weight of the epoxy resin (a1) may be increased by using a dibasic acid, such as bisphenol A, before use.

The reaction between the epoxy resin (a1) and the (meth)acrylic acid (a2) is preferably carried out by using an esterification catalyst at 60°C to 140°C. A polymerization inhibitor and other chemicals can also be used.

The molding resin composition of the present invention may contain an epoxy resin. The average epoxy equivalent after the vinyl ester (A) is mixed with the epoxy resin is 4000 or more in order to improve the mechanical properties, such as strength and heat resistance, of the molded article.

Examples of the unsaturated monomer (B) include styrene compounds, such as styrene, p-methylstyrene, p-ethylstyrene, p-propylstyrene, p-isopropylstyrene, p-butylstyrene, p-tert-butylstyrene, o-methylstyrene, o-ethylstyrene, o-propylstyrene, o-isopropylstyrene, m-methylstyrene, methylstyrene, m-propylstyrene, m-isopropylstyrene, m-butylstyrene, mesitylstyrene, 2,4-dimethylstyrene, 2,5-dimethylstyrene, 3,5-dimethylstyrene, 4-butenylstyrene, and other alkyl styrenes, p-chlorostyrene, m-chlorostyrene, o-chlorostyrene, p-bromostyrene, m-bromostyrene, o-bromostyrene, p-fluorostyrene, m-fluorostyrene, o-fluorostyrene, o-methyl-p-fluorostyrene, and other halogenated styrenes, p-methoxy styrene, o-methoxy styrene, m-methoxy styrene, and other alkoxy styrenes, hydroxy styrene, cyanostyrene, and vinyl benzoate; divinylbenzene compounds, such as 1,3-divinylbenzene, 1,4-divinylbenzene, 1,3-diisopropenylbenzene, and 1,4-diisopropenylbenzene; monofunctional (meth)acrylate compounds, such as methyl (meth)acrylate, ethyl (meth)acrylate, propyl (meth)acrylate, butyl (meth)acrylate, 2-ethylhexyl (meth)acrylate, cyclohexyl (meth)acrylate, isobornyl (meth)acrylate, benzyl (meth)acrylate, methylbenzyl (meth)acrylate, phenoxyethyl (meth)acrylate, methylphenoxyethyl (meth)acrylate, morpholine (meth)acrylate, phenylphenoxyethyl acrylate, phenylbenzyl (meth)acrylate, phenylmethacrylate, dicyclopentenyl (meth)acrylate, dicyclopentenyloxyethyl (meth)acrylate, and dicyclopentanyl methacrylate; hydroxy group-containing (meth)acrylate compounds, such as hydroxyethyl (meth)acrylate, hydroxypropyl (meth)acrylate, and hydroxybutyl (meth)acrylate; and di(meth)acrylate compounds, such as ethylene glycol di(meth)acrylate, propylene glycol di(meth)acrylate, 1,4-butanediol di(meth)acrylate, 1,6-hexanediol di(meth)acrylate, bisphenol di(meth)acrylate, and 1,4-cyclohexanedimethanol di(meth)acrylate. These unsaturated monomers may be used alone or in combination of two or more.

The unsaturated monomer (B) preferably has a flash point of 100°C or higher in order to reduce odors during the molding process and enable high-temperature short-time molding. In particular, aromatic unsaturated monomers are preferred, and benzyl methacrylate and phenoxyethyl methacrylate are more preferred in order to provide the molding material with high strength.

The flash point in the present invention is measured by the Cleveland open-cup method described in JIS K 2265-4: 2007.

The mass ratio ((A)/(B)) of the vinyl ester (A) to the unsaturated monomer (B) is in the range of 40/60 to 85/15, preferably in the range of 50/50 to 70/30 in order to improve the balance between the impregnation of the resin into carbon fiber, the ease of handling (tackiness), and the curability.

The viscosity of a mixture of the vinyl ester (A) and the unsaturated monomer (B) is preferably in the range of 200 to 8000 mPa·s (25°C, single cylinder rotational viscometer) in order to improve the impregnation of the resin into carbon fiber.

Examples of the polyisocyanate (C) include aromatic polyisocyanates, such as diphenylmethane diisocyanate (4,4'-isomer, 2,4'-isomer, or 2,2'-isomer, or a mixture of these), modified diphenylmethane diisocyanates, such as carbodiimide-modified, nurate-modified, biuret-modified, and urethane imine-modified diphenylmethane diisocyanates, and polyol-modified diphenylmethane diisocyanate modified with a polyol having a number average molecular weight of 1,000 or less, such as diethylene glycol or dipropylene glycol, tolylene diisocyanate, tolidine diisocyanate, polymethylene polyphenyl polyisocyanate, xylylene diisocyanate, 1,5-naphthalene diisocyanate, and tetramethylxylene diisocyanate; alicyclic polyisocyanates, such as isophorone diisocyanate, hydrogenated diphenylmethane diisocyanate, hydrogenated xylylene diisocyanate, and norbornene diisocyanate; aliphatic polyisocyanates, such as hexamethylene diisocyanate, nurate-modified and biuret-modified hexamethylene diisocyanates, and an adduct of hexamethylene diisocyanate, and diisocyanate dimerate. Among these, aromatic polyisocyanates are preferred, and carbodiimide-modified diphenylmethane diisocyanate is more preferred in order to provide the molding material with ease of handling (film releasability and tackiness). Examples of carbodiimide-modified diphenylmethane diisocyanate include diphenylmethane diisocyanate having a carbodiimide group and diphenylmethane diisocyanate having a carbodiimide group bonded to an isocyanate group to form a urethane imine structure. These polyisocyanates (C) may be used alone or in combination of two or more.

The molar ratio (NCO/OH) of the isocyanate group (NCO) of the polyisocyanate (C) to the hydroxy group (OH) of the vinyl ester (A) is preferably in the range of 0.1 to 0.85, more preferably in the range of 0.25 to 0.8 in order to improve the balance between fluidity and ease of handling, such as film releasability and tackiness, during molding.

It is important that the polymerization initiator (D) be at least one compound selected from the group consisting of the compounds (D1) represented by general formula (1), benzopinacol or its ester compounds (D2), and the compounds (D3) having an azo group in order to prevent or reduce the emission of volatile organic compounds from the molded article. 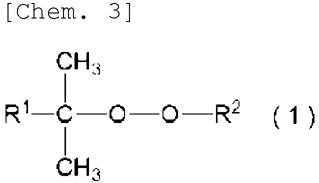 (in general formula (1), R¹ represents an aryl group, and R² represents a hydrogen atom, an alkyl group, or an arylalkyl group.)

Since the polymerization initiator (D1) can further reduce the emission of volatile organic compounds from the molded article, the compounds represented by general formula (1) are preferably dicumyl peroxide, t-butyl-α-cumyl peroxide, and di(2-t-butyl peroxyisopropyl)benzene. These polymerization initiators (D1) may be used alone or in combination of two or more.

The amount of the polymerization initiator (D1) is preferably in the range of 0.1 to 3 mass%, more preferably in the range of 0.3 to 2 mass% relative to the total amount of the vinyl ester (A) and the unsaturated monomer (B) in order to further reduce the emission of volatile organic compounds from the molded article while maintaining good curing properties and high storage stability.

It is important that the polymerization initiator (D2) be benzopinacol or its ester compound in order to prevent or reduce the emission of volatile organic compounds from the molded article. These polymerization initiators (D2) may be used alone or in combination of two or more.

The amount of the polymerization initiator (D2) is preferably in the range of 0.05 to 5 mass%, more preferably in the range of 0.1 to 3 mass% relative to the total amount of the vinyl ester (A) and the unsaturated monomer (B) in order to further reduce the emission of volatile organic compounds from the molded article while maintaining good curing properties and high storage stability.

Examples of the polymerization initiator (D3) include 2,2'-azobis(isobutyronitrile), 2,2'-azobis(2-methylbutyronitrile, 2,2'-azobis(2,4-dimethylvaleronitrile), dimethyl 2,2'-azobis(2-methylpropionate), 1,1'-azobis(cyclohexane-1-carbonitrile), dimethyl 1,1'-azobis(1-cyclohexanecarboxylate), and 1,1'-azobis(1-acetoxy-1-phenylethane). The 10-hour half-life temperature of the polymerization initiator (D3) is preferably in the range of 60°C to 100°C because the emission of volatile organic compounds can be further prevented or reduced by effectively accelerating the curing reaction of the unsaturated monomer (B). These polymerization initiators (D3) may be used alone or in combination of two or more.

The polymerization initiator (D3) is preferably represented by general formula (2) below in order to further prevent or reduce the emission of volatile organic compounds from the molded article. The polymerization initiator (D3) is more preferably 2,2'-azobis(2-methylbutyronitrile) or 1,1'-azobis(1-acetoxy-1-phenylethane) because of high solubility in resin, and still more preferably 1,1'-azobis(1-acetoxy-1-phenylethane) in order to further reduce the emission of VOCs from the molded article. 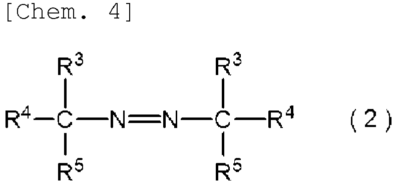 (in general formula (2), R³ represents an alkyl group, R⁴ represents an alkyl group or an aryl group, and R⁵ represents a cyano group or an acetoxy group.)

The amount of the polymerization initiator (D3) is preferably in the range of 0.1 to 3 mass%, more preferably in the range of 0.3 to 2 mass% relative to the total amount of the vinyl ester (A) and the unsaturated monomer (B) in order to further reduce the emission of volatile organic compounds from the molded article while maintaining good curing properties and high storage stability.

The molding resin composition of the present invention may further contain a polymerization initiator other than the polymerization initiator (D). The proportion of the polymerization initiator (D) in all the polymerization initiators is preferably 50 mass% or more, more preferably 75 mass% or more in order to prevent or reduce the emission of volatile organic compounds from the molded article.

A fiber-reinforced molding material of the present invention contains the above molding resin composition and a reinforcing fiber (E).

Examples of the reinforcing fiber (E) include organic fibers, such as carbon fiber, glass fiber, silicon carbide fiber, alumina fiber, boron fiber, metal fiber, aramid fiber, vinylon fiber, and Tetoron fiber. To provide the molded article with high strength and high elasticity, carbon fiber or glass fiber are preferred, and carbon fiber is more preferred. These reinforcing fibers (E) may be used alone or in combination of two or more.

The glass fiber may be a glass fiber produced by using, for example, alkali glass, low-alkali glass, or alkali-free glass as a material, and preferably alkali-free glass (E-glass) which undergoes less degradation with time and has stable mechanical properties.

The carbon fiber may be one of various carbon fibers, such as polyacrylonitrile-based carbon fiber, pitch-based carbon fiber, and rayon-based carbon fiber. Among these, polyacrylonitrile-based carbon fiber is preferred since carbon fiber with high strength is easily available.

The reinforcing fiber (E) may be, for example, a twisted thread, a spun thread, a spun fiber, or a nonwoven fiber. Examples of the shape of the carbon fiber include filament, yarn, roving, strand, chopped strand, felt, needle punch, cloth, roving cloth, milled fiber, and nanofiber.

The number of filaments in the fiber bundle used as the reinforcing fiber (E) is preferably in the range of 1,000 to 60,000 in order to further improve the resin impregnation and the mechanical properties of the molded article.

The amount of the reinforcing fiber (E) in the components of the fiber-reinforced molding material of the present invention is preferably in the range of 25 to 80 mass%, more preferably in the range of 40 to 70 mass% in order to further improve the mechanical properties of the obtained molded article.

The fiber-reinforced molding material of the present invention may contain components other than the vinyl ester (A), the unsaturated monomer (B), the polyisocyanate (C), the polymerization initiator (D), and the reinforcing fiber (E). For example, the fiber-reinforced molding material of the present invention may contain a thermosetting resin other than the vinyl ester (A), a thermoplastic resin, a polymerization inhibitor, a curing accelerator, a filler, a shrinkage reducing agent, a release agent, a viscosity improver, a viscosity reducer, a pigment, an antioxidant, a plasticizer, a flame retardant, an antimicrobial agent, a UV stabilizer, a UV absorber, a reinforcing material, a photocuring agent, and other components.

Examples of the thermosetting resin include a vinyl urethane resin, an unsaturated polyester resin, an acrylic resin, an epoxy resin, a phenolic resin, a melamine resin, and a furan resin. These thermosetting resins may be used alone or in combination of two or more.

Examples of the thermoplastic resin include a polyamide resin, a polyethylene terephthalate resin, a polybutylene terephthalate resin, a polycarbonate resin, a urethane resin, a polypropylene resin, a polyethylene resin, a polystyrene resin, an acrylic resin, a polybutadiene resin, a polyisoprene resin, and resins produced by modifying these resins by copolymerization or the like. These thermoplastic resins may be used alone or in combination of two or more.

Examples of the polymerization inhibitor include hydroquinone, trimethylhydroquinone, p-t-butylcatechol, t-butylhydroquinone, toluhydroquinone, p-benzoquinone, naphthoquinone, hydroquinone monomethyl ether, phenothiazine, organic copper compounds such as copper naphthenate, copper chloride, and nitroxyl radical compounds such as 4-hydroxy-2,2,6,6-tetramethylpiperidine-1-oxyl. These polymerization inhibitors may be used alone or in combination of two or more.

Examples of the curing accelerator include metal soaps, such as cobalt naphthenate, cobalt octenoate, vanadyl octenoate, copper naphthenate, and barium naphthenate; and metal chelate compounds, such as vanadyl acetylacetate, cobalt acetylacetate, and iron acetylacetonate. Examples of amines include N,N-dimethylamino-p-benzaldehyde, N,N-dimethylaniline, N,N-diethylaniline, N,N-dimethyl-p-toluidine, an ethylene oxide or propylene oxide adduct of N,N-dimethyl-p-toluidine, N-ethyl-m-toluidine, an ethylene oxide or propylene oxide adduct of N-ethyl-m-toluidine, triethanolamine, m-toluidine, diethylenetriamine, pyridine, phenylmorpholine, piperidine, and diethanolaniline. These curing accelerators may be used alone or in combination of two or more.

Examples of the filler include inorganic compounds and organic compounds, which can be used to adjust the physical properties, such as strength, elastic modulus, impact strength, and fatigue durability, of the molded article.

Examples of the inorganic compounds include calcium carbonate, magnesium carbonate, barium sulfate, mica, talc, kaolin, clay, celite, asbestos, barite, baryta, silica, silica sand, dolomite limestone, gypsum, aluminum fine powder, hollow microspheres, alumina, glass powder, aluminum hydroxide, white marble, zirconium oxide, antimony trioxide, titanium oxide, molybdenum dioxide, and iron powder.

Examples of the organic compounds include natural polysaccharide powders, such as cellulose and chitin, and synthetic resin powders. Examples of the synthetic resin powders include organic powders composed of hard resin, soft rubber, elastomers, or polymers (copolymers) or other materials, and particles having a multilayer structure, such as a core-shell structure. Specific examples include particles made of butadiene rubber and/or acrylic rubber, urethane rubber, silicon rubber, or other materials, a polyimide resin powder, a fluororesin powder, and a phenolic resin powder. These fillers may be used alone or in combination of two or more.

Examples of the release agent include zinc stearate, calcium stearate, paraffin wax, polyethylene wax, and carnauba wax. Preferred examples include zinc stearate, paraffin wax, polyethylene wax, and carnauba wax. These release agents may be used alone or in combination of two or more.

Examples of the viscosity improver include metal oxides and metal hydroxides, such as magnesium oxide, magnesium hydroxide, calcium oxide, and calcium hydroxide, and acrylic resin-based fine particles, which can be appropriately selected according to the ease of handling of the fiber-reinforced molding material of the present invention. These viscosity improvers may be used alone or in combination of two or more.

The fiber-reinforced molding material of the present invention is preferably a sheet molding compound (hereinafter abbreviated as "SMC") or a bulk molding compound (hereinafter abbreviated as "BMC") from the viewpoint of high productivity and moldability with design diversity.

Examples of the method for producing the SMC include a method that involves mixing and dispersing components such as the vinyl ester (A), the unsaturated monomer (B), the polyisocyanate (C), and the polymerization initiator (D) by using a mixer, such as a common mixer, an intermixer, a planetary mixer, a roll, a kneader, or an extruder, applying the resulting resin composition to carrier films placed above and below such that the resin composition has a uniform thickness, sandwiching the reinforcing fiber (E) between the resin compositions on the carrier films placed above and below, then passing and pressing the whole between impregnation rolls such that the reinforcing fiber (E) is impregnated with the resin composition, and then winding the whole into a roll shape or folding the whole in a zigzag manner. Preferably, the resulting product is subsequently aged at a temperature of 20°C to 60°C. The carrier film may be, for example, a polyethylene film, a polypropylene film, a laminate film of polyethylene and polypropylene, polyethylene terephthalate, or nylon.

Examples of the method for producing the BMC include a method that involves mixing and dispersing components such as the vinyl ester (A), the unsaturated monomer (B), the polyisocyanate (C), and the polymerization initiator (D) by using a mixer, such as a common mixer, an intermixer, a planetary mixer, a roll, a kneader, or an extruder, and mixing and dispersing the reinforcing fiber (E) with/in the resulting resin composition, like the method for producing the SMC. Similarly to the SMC, the resulting product is preferably aged at a temperature of 20°C to 60°C.

The molded article of the present invention is made from the fiber-reinforced molding material, and preferably formed by heat compression molding of SMC or BMC from the viewpoint of high productivity and design diversity.

The heat compression molding may be, for example, a method for producing the molded article in which a predetermined amount of a molding material such as SMC or BMC is weighed, placed in a mold previously heated to 80°C to 180°C, and molded by a compression molding machine to shape the molding material, the molding material is cured by maintaining a molding pressure of 0.1 to 30 MPa, and the molded article is then taken out. With regard to specific molding conditions, the molding conditions are preferably such that a molding pressure of 1 to 10 MPa is maintained at a mold temperature of 100°C to 160°C in the mold for 1 to 2 minutes per millimeter of the thickness of the molded article, and more preferably such that a molding pressure of 1 to 10 MPa is maintained at a mold temperature of 120°C to 160°C for 30 to 150 seconds per millimeter of the thickness of the molded article in order to further improve the productivity.

Since the molded article made from the fiber-reinforced molding material of the present invention has good properties such as high flexural strength and emits less volatile organic compounds, the molded article can be suitably used as automotive parts, railway vehicle parts, aerospace craft parts, ship parts, housing equipment parts, sports equipment parts, parts for light vehicles, parts for construction and civil engineering, bodies of OA equipment and other equipment, and other applications.

### EXAMPLES

The present invention will be described below in detail by way of specific examples. The hydroxyl value was determined by measuring the number of milligrams of potassium hydroxide (mgKOH/g) required to neutralize acetic acid generated when 1 g of a resin sample was reacted at a specified temperature for a specified time using an acetylating agent according to the method described in JIS K-0070. The epoxy equivalent was calculated according to the method described in JIS K-7236 using a specified calculation formula, wherein perchloric acid was dropped to a resin sample present together with ammonium bromide, and the point at which the generated hydrogen bromide consumed all epoxy groups and became excessive was defined as an end point. The acid value was determined by measuring the number of milligrams of potassium hydroxide (mgKOH/g) required to neutralize (meth)acrylic acid in 1 g of a resin sample according to the method described in JIS K-0070.

### (Synthesis Example 1: Synthesis of Vinyl Ester (A-1))

In a 2L-flask equipped with a thermometer, a nitrogen inlet tube, and a stirrer, 661 parts by mass of an epoxy resin ("EPICLON 850" available from DIC Corporation, bisphenol A-type epoxy resin, epoxy equivalent 188), 58.8 parts by mass of bisphenol A, and 0.36 parts by mass of 2-methylimidazole were charged and heated to 120°C to cause reactions for 3 hours, and the epoxy equivalent was measured. After the epoxy equivalent was confirmed to be 240 as set, the product was cooled to around 60°C, 253 parts by mass of methacrylic acid and 0.28 parts by mass of t-butylhydroquinone were charged, and the mixture was heated to 90°C under a gas flow of a mixture of nitrogen and air at 1:1. To the mixture, 0.25 parts by mass of 2-methylimidazole was added, and the resulting mixture was heated to 110°C to cause reactions for 10 hours. As a result, the acid value was 6 or less, and the epoxy equivalent was 10080. The reaction was terminated since the epoxy equivalent was confirmed to be 4000 or more. After being cooled to around 60°C, the product was taken out of the reaction vessel to provide a vinyl ester (A-1) having a hydroxyl value of 206 mgKOH/g.

### (Synthesis Example 2: Synthesis of Vinyl Ester (A-2))

In a 2L-flask equipped with a thermometer, a nitrogen inlet tube, and a stirrer, 680 parts by mass of an epoxy resin ("EPICLON 840 LV" available from DIC Corporation, bisphenol A-type epoxy resin, epoxy equivalent 179), 317 parts by mass of methacrylic acid, and 0.28 parts by mass of t-butylhydroquinone were charged and heated to 90°C under a gas flow of a mixture of nitrogen and air at 1:1. To the mixture, 0.65 parts by mass of 2-methylimidazole was charged, and the resulting mixture was heated to 110°C to cause reactions for 10 hours. As a result, the acid value was 6 or less, and the epoxy equivalent was 4138. The reaction was terminated since the epoxy equivalent was confirmed to be 4000 or more. After being cooled to around 60°C, the product was taken out of the reaction vessel to provide a vinyl ester (A-2) having a hydroxyl value of 210 mgKOH/g.

### (Example 1: Preparation and Evaluation of Molding Resin Composition (1))

A molding resin composition (1) was prepared by mixing 20 parts by mass of a polyisocyanate ("Cosmonate LL" available from Mitsui Chemicals, Inc., hereinafter abbreviated as a "polyisocyanate (C-1)") and 1 part by mass of dicumyl peroxide ("Perkadox BC-FF" available from Kayaku Akzo Corporation, hereinafter abbreviated as "DCPO") with 100 parts by mass of a resin solution in which 55 parts by mass of the vinyl ester (A-1) produced in Synthesis Example 1 was dissolved in 45 parts by mass of phenoxyethyl methacrylate. The molar ratio (NCO/OH) of the molding resin composition (1) was 0.68.

### [Preparation of Fiber-Reinforced Molding Material]

The molding resin composition (1) prepared above was applied to a laminate film of polyethylene and polypropylene at an average coating amount of 1 kg/m², and carbon fibers (hereinafter abbreviated as carbon fibers (E-1)) obtained by cutting a carbon fiber roving ("T700SC-12000-50C" available from Toray Industries, Inc.) into 25 mm were uniformly dropped on the molding resin composition (1) from the air so as to provide no fiber orientation, a uniform thickness, and a carbon fiber content of 50% by mass. The carbon fibers were sandwiched between the laminate film and another laminate film coated with the resin composition (1) such that the carbon fibers were impregnated with the resin, and then left to stand in a thermostatic incubator at 45°C for 24 hours to produce a fiber-reinforced molding material (1) as a SMC. The weight of the fiber-reinforced molding material (1) was 2 kg/m².

### [Production of Molded Article]

The fiber-reinforced molding material (1) prepared above was released from the films and cut into pieces of 26.5 cm × 26.5 cm. Three pieces were superposed on top of one another, set at the center of a plate-shaped mold of 30 cm × 30 cm, and molded at a press mold temperature of 140°C and a press pressure of 12 MPa for a press time of 5 minutes to produce a molded article (1) having a plate shape and a thickness of 3 mm.

### [Evaluation of Emission of Volatile Organic Compounds (VOCs)]

Total 2 g of pieces (10 to 25 mg for each piece) cut from the molded article were weighed and placed in a 20 mL vial, and the vial was then heated at 120°C for 5 hours. The emitted gas was quantitatively analyzed by FID-gas chromatography. The analytical method and the method for calculating the VOC emission (µgC/g) from the molded article were in accordance with VDA 277. The VOC emission (µgC/g) from the molded article was evaluated according to the following criteria.
A: less than 100 µgC/g
B: 100 µgC/g or more and less than 300 µgC/g
C: 300 µg/g or more and less than 400 µgC/g
D: 400 µg/g or more

### [Evaluation of Flexural Strength]

A specimen 25 mm wide and 150 mm long was cut from the molded article produced above and subjected to a three-point flexural test in accordance with JIS K 7074 to measure the flexural strength.

### (Example 2: Preparation and Evaluation of Molding Resin Composition (2))

A molding resin composition (2), a fiber-reinforced molding material (2), and a molded article (1) were produced in the same manner as in Example 1 except that 1 part by mass of DCPO used in Example 1 was changed to 1.5 parts by mass, and then subjected to the corresponding evaluation. The molar ratio (NCO/OH) of the molding resin composition (2) was 0.68, and the weight of the fiber-reinforced molding material (2) was 2 kg/m².

### (Example 3: Preparation and Evaluation of Molding Resin Composition (3))

A molding resin composition (3), a fiber-reinforced molding material (3), and a molded article (3) were produced in the same manner as in Example 1 except that 1 part by mass of DCPO used in Example 1 was changed to 0.6 parts by mass of DCPO and 0.1 parts by mass of t-butylperoxy-2-ethylhexanoate ("Kayaester O" available from Kayaku Akzo Corporation), and then subjected to the corresponding evaluation. The molar ratio (NCO/OH) of the molding resin composition (3) was 0.68, and the weight of the fiber-reinforced molding material (3) was 2 kg/m².

### (Example 4: Preparation and Evaluation of Molding Resin Composition (4))

A molding resin composition (4), a fiber-reinforced molding material (4), and a molded article (4) were produced in the same manner as in Example 1 except that 1 part by mass of DCPO used in Example 1 was changed to 1 part by mass of t-butyl-α-cumyl peroxide ("Trigonox T" available from Kayaku Akzo Corporation, hereinafter abbreviated as "TBCP"), and then subjected to the corresponding evaluation. The molar ratio (NCO/OH) of the molding resin composition (4) was 0.68, and the weight of the fiber-reinforced molding material (4) was 2 kg/m².

### (Example 5: Preparation and Evaluation of Molding Resin Composition (5))

A molding resin composition (5), a fiber-reinforced molding material (5), and a molded article (5) were produced in the same manner as in Example 1 except that 1 part by mass of DCPO used in Example 1 was changed to 0.5 parts by mass of TBCP and 0.1 parts by mass of t-butylperoxy-2-ethylhexanoate ("Kayaester O" available from Kayaku Akzo Corporation), and then subjected to the corresponding evaluation. The molar ratio (NCO/OH) of the molding resin composition (5) was 0.68, and the weight of the fiber-reinforced molding material (5) was 2 kg/m².

### (Example 6: Preparation and Evaluation of Molding Resin Composition (6))

A molding resin composition (6) was prepared by mixing and stirring 1 part by mass of benzopinacol that had been ground into fine powder in a mortar and 100 parts by mass of a resin solution in which 55 parts by mass of the vinyl ester (A-1) produced in Synthesis Example 1 was dissolved in 45 parts by mass of phenoxyethyl methacrylate, and after confirmation of dissolution of benzopinacol, mixing the resulting mixture with 20 parts by mass of the polyisocyanate (C-1). The molar ratio (NCO/OH) of the molding resin composition (6) was 0.68.

A fiber-reinforced molding material (6) and a molded article (6) were produced in the same manner as in Example 1 except that the molding resin composition (1) used in Example 1 was changed to the molding resin composition (6), and then subjected to the corresponding evaluation. The weight of the fiber-reinforced molding material (6) was 2 kg/m².

### (Example 7: Preparation and Evaluation of Molding Resin Composition (7))

A molding resin composition (7), a fiber-reinforced molding material (7), and a molded article (7) were produced in the same manner as in Example 6 except that 1 part by mass of benzopinacol used in Example 6 was changed to 0.5 parts by mass of benzopinacol and 0.5 parts by mass of DCPO, and then subjected to the corresponding evaluation. The molar ratio (NCO/OH) of the molding resin composition (7) was 0.68, and the weight of the fiber-reinforced molding material (7) was 2 kg/m².

### (Example 8: Preparation and Evaluation of Molding Resin Composition (8))

A molding resin composition (8), a fiber-reinforced molding material (8), and a molded article (8) were produced in the same manner as in Example 6 except that 1 part by mass of benzopinacol used in Example 6 was changed to 0.5 parts by mass of benzopinacol, and then subjected to the corresponding evaluation. The molar ratio (NCO/OH) of the molding resin composition (8) was 0.68, and the weight of the fiber-reinforced molding material (8) was 2 kg/m².

### (Example 9: Preparation and Evaluation of Molding Resin Composition (9))

A molding resin composition (9) was prepared by mixing and stirring 1 part by mass of 1,1'-azobis(1-acetoxy-1-phenylethane) and 100 parts by mass of a resin solution in which 55 parts by mass of the vinyl ester (A-1) produced in Synthesis Example 1 was dissolved in 45 parts by mass of phenoxyethyl methacrylate, and after confirmation of dissolution, mixing the resulting mixture with 20 parts by mass of the polyisocyanate (C-1). The molar ratio (NCO/OH) of the molding resin composition (9) was 0.68.

A fiber-reinforced molding material (9) and a molded article (9) were produced in the same manner as in Example 1 except that the molding resin composition (1) used in Example 1 was changed to the molding resin composition (9) and the temperature of the thermostatic incubator for preparing the fiber-reinforced molding material was changed from 45°C to 25°C. The fiber-reinforced molding material (9) and the molded article (9) were then subjected to the corresponding evaluation. The weight of the fiber-reinforced molding material (9) was 2 kg/m².

### (Example 10: Preparation and Evaluation of Molding Resin Composition (10))

A molding resin composition (10), a fiber-reinforced molding material (10), and a molded article (10) were produced in the same manner as in Example 9 except that 1 part by mass of 1,1'-azobis(1-acetoxy-1-phenylethane) used in Example 9 was changed to 1 part by mass of 2,2'-azobis(2-methylbutyronitrile), and then subjected to the corresponding evaluation. The molar ratio (NCO/OH) of the molding resin composition (10) was 0.68, and the weight of the fiber-reinforced molding material (10) was 2 kg/m².

### (Comparative Example 1: Preparation and Evaluation of Molding Resin Composition (R1))

A molding resin composition (R1) was prepared by mixing 10 parts by mass of the polyisocyanate (C-1) and 1.0 part by mass of t-amyl peroxy isopropyl carbonate ("Kayacarbon AIC-75" available from Kayaku Akzo Corporation) with 100 parts by mass of a resin solution in which 70 parts by mass of the vinyl ester (A-2) produced in Synthesis Example 2 was dissolved in 30 parts by mass of styrene. The molar ratio (NCO/OH) of the molding resin composition (R1) was 0.26.

A fiber-reinforced molding material (R1) and a molded article (R1) were produced in the same manner as in Example 1 except that the molding resin composition (1) used in Example 1 was changed to the molding resin composition (R1), and then subjected to the corresponding evaluation.

The evaluation results of the molding resin compositions (1) to (10) and (R1) produced above were shown in Tables 1 and 2.

**[Table 1]**

| Table 1 | | Example 1 | Example 2 | Example 3 | Example 4 | Example 5 | Example 6 |
|---|---|---|---|---|---|---|---|
| Fiber-reinforced molding material | | (1) | (2) | (3) | (4) | (5) | (6) |
| Vinyl ester (A) Epoxy equivalent of epoxy resin | (A-1) 240 | 55 | 55 | 55 | 55 | 55 | 55 |
| Unsaturated monomer (B) | phenoxyethyl methacrylate | 45 | 45 | 45 | 45 | 45 | 45 |
| Polyisocyanate (C) | (C-1) | 20 | 20 | 20 | 20 | 20 | 20 |
| Polymerization initiator (D) | DCPO | 1 | 15 | 0.6 | | | |
| | TBCP | | | | 1 | 0.5 | |
| | benzopinacol | | | | | | 1 |
| Other polymerization initiator | Kayaester O | | | 0.1 | | 0.1 | |
| Carbon fiber | (E-1) | 120 | 120 | 120 | 120 | 120 | 120 |
| Temperature of incubator during preparation of molding material (°C) | | 45 | 45 | 45 | 45 | 45 | 45 |
| VOC emission from molded article | | A | A | A | B | B | A |
| Flexural strength of molded article (MPa) | | 300 or more | 300 or more | 300 or more | 300 or more | 300 or more | 300 or more |

**[Table 2]**

| Table 2 | | Example 7 | Example 8 | Example 9 | Example 10 | Comparative Example 1 |
|---|---|---|---|---|---|---|
| Fiber-reinforced molding material | | (7) | (8) | (9) | (10) | (R1) |
| Vinyl ester (A) Epoxy equivalent of epoxy resin | (A-1) 240 | 55 | 55 | 55 | 55 | |
| | (A-2) 179 | | | | | 70 |
| Unsaturated monomer (B) | phenoxyethyl methacrylate | 45 | 45 | 45 | 45 | |
| | styrene | | | | | 30 |
| Polyisocyanate (C) | (C-1) | 20 | 20 | 20 | 20 | 10 |
| Polymerization initiator (D) | DCPO | 0.5 | | | | |
| | benzopinacol | 0.5 | 0.5 | | | |
| | 1,1'-azobis(1-acetoxy-1-phenylethane) | | | 1 | | |
| | 2,2'-azobis(2-methylbutyronitrile) | | | | 1 | |
| Other polymerization initiator | AIC-75 | | | | | 1.0 |
| Carbon fiber | (E-1) | 120 | 120 | 120 | 120 | 110 |
| Temperature of incubator during preparation of molding material (°C) | | 45 | 45 | 25 | 25 | 45 |
| VOC emission from molded article | | A | A | A | B | D |
| Flexural strength of molded article (MPa) | | 300 or more | 300 or more | 300 or more | 300 or more | 300 or more |

The molded articles made from the fiber-reinforced molding materials of the present invention in Examples 1 to 10 were confirmed to emit less volatile organic compounds and have high flexural strengths.

In Comparative Example 1, a polymerization initiator having a particular structure, an essential component of the present invention, was not used, and the molded article was confirmed to emit a high level of volatile organic compounds.

## Claims

1. A molding resin composition comprising a vinyl ester (A), an unsaturated monomer (B), a polyisocyanate (C), and a polymerization initiator (D) as essential materials, wherein the polymerization initiator (D) is at least one compound selected from the group consisting of compounds (D1) represented by general formula (1), benzopinacol or its ester compounds (D2), and compounds (D3) having an azo group, wherein the epoxy equivalent weight of the vinyl ester (A) is 4000 or more, measured according to the method identified in the specification, 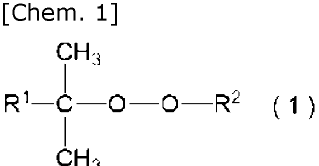 in general formula (1), R¹ represents an aryl group, and R² represents a hydrogen atom, an alkyl group, or an arylalkyl group.

2. The molding resin composition according to Claim 1, wherein the polymerization initiator (D3) having an azo group has a 10-hour half-life temperature in a range of 60°C to 100°C.

3. The molding resin composition according to Claim 1 or 2, wherein the polymerization initiator (D3) having an azo group is represented by general formula (2) below, 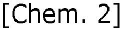 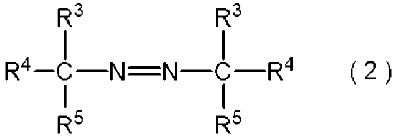 in general formula (2), R³ represents an alkyl group, R⁴ represents an alkyl group or an aryl group, and R⁵ represents a cyano group or an acetoxy group.

4. The molding resin composition according to any one of Claims 1 to 3, wherein the vinyl ester (A) is a reaction product between an epoxy resin (a1) having an epoxy equivalent in a range of 135 to 500 and (meth)acrylic acid (a2).

5. The molding resin composition according to any one of Claims 1 to 4, wherein the unsaturated monomer (B) is phenoxyethyl methacrylate and/or benzyl methacrylate.

6. The molding resin composition according to Claim 4 or 5, wherein a molar ratio (COOH/EP) of a carboxyl group (COOH) of the (meth)acrylic acid (a2) to an epoxy group (EP) of the epoxy resin (a1) is in a range of 0.6 to 1.1.

7. The molding resin composition according to any one of Claims 1 to 6, wherein the polyisocyanate (C) is an aromatic polyisocyanate.

8. A fiber-reinforced molding material comprising the molding resin composition according to any one of Claims 1 to 7 and a reinforcing fiber (E).

9. A molded article comprising the fiber-reinforced molding material according to Claim 8.

## Patentansprüche

1. Formharzzusammensetzung, die einen Vinylester (A), ein ungesättigtes Monomer (B), ein Polyisocyanat (C) und einen Polymerisationsinitiator (D) als wesentliche Materialien umfasst, wobei der Polymerisationsinitiator (D) mindestens eine Verbindung ist, ausgewählt aus der Gruppe bestehend aus Verbindungen (D1), die durch die allgemeine Formel (1) dargestellt sind, Benzopinacol oder seinen Esterverbindungen (D2) und Verbindungen (D3), die eine Azogruppe aufweisen, wobei das Epoxyäquivalentgewicht des Vinylesters (A) 4000 oder mehr beträgt, gemessen gemäß des in der Beschreibung identifizierten Verfahrens, 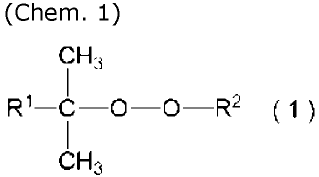 in der allgemeinen Formel (1) stellt R¹ eine Arylgruppe dar und stellt R² ein Wasserstoffatom, eine Alkylgruppe oder eine Arylalkylgruppe dar.

2. Formharzzusammensetzung nach Anspruch 1, wobei der Polymerisationsinitiator (D3) mit einer Azogruppe eine 10-stündige Halbwertszeittemperatur in einem Bereich von 60°C bis 100°C aufweist.

3. Formharzzusammensetzung nach Anspruch 1 oder 2, wobei der Polymerisationsinitiator (D3), der eine Azogruppe aufweiset, durch die nachstehende allgemeine Formel (2) dargestellt ist, 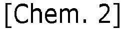 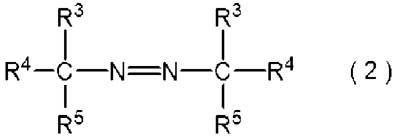 in der allgemeinen Formel (2) stellt R³ eine Alkylgruppe dar, stellt R⁴ eine Alkylgruppe oder eine Arylgruppe dar, und stellt R⁵ eine Cyanogruppe oder eine Acetoxygruppe dar.

4. Formharzzusammensetzung nach einem der Ansprüche 1 bis 3, wobei der Vinylester (A) ein Reaktionsprodukt zwischen einem Epoxidharz (a1) mit einem Epoxidäquivalent im Bereich von 135 bis 500 und (Meth)acrylsäure (a2) ist.

5. Formharzzusammensetzung nach einem der Ansprüche 1 bis 4, wobei das ungesättigte Monomer (B) Phenoxyethylmethacrylat und/oder Benzylmethacrylat ist.

6. Formharzzusammensetzung nach Anspruch 4 oder 5, wobei ein Molverhältnis (COOH/EP) einer Carboxylgruppe (COOH) der (Meth)acrylsäure (a2) zu einer Epoxygruppe (EP) des Epoxyharzes (a1) im Bereich von 0,6 bis 1,1 liegt.

7. Formharzzusammensetzung nach einem der Ansprüche 1 bis 6, wobei das Polyisocyanat (C) ein aromatisches Polyisocyanat ist.

8. Faserverstärktes Formmaterial, das die Formharzzusammensetzung nach einem der Ansprüche 1 bis 7 und eine Verstärkungsfaser (E) enthält.

9. Formkörper, der das faserverstärkte Formmaterial nach Anspruch 8 umfasst.

## Revendications

1. Composition de résine de moulage comprenant un ester vinylique (A), un monomère insaturé (B), un polyisocyanate (C) et un initiateur de polymérisation (D) comme matériaux essentiels, dans laquelle l'initiateur de polymérisation (D) est au moins un composé choisi dans le groupe constitué par des composés (D1) représentés par la formule générale (1), le benzopinacol ou ses composés esters (D2), et des composés (D3) ayant un groupe azoïque, dans lequel le poids équivalent époxy de l'ester vinylique (A) est de 4000 ou plus, mesuré selon le procédé identifié dans la description, 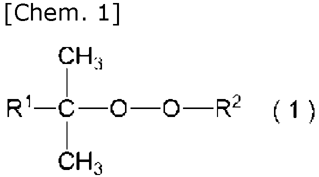 dans la formule générale (1), R¹ représente un groupe aryle, et R² représente un atome d'hydrogène, un groupe alkyle ou un groupe arylalkyle.

2. Composition de résine de moulage selon la revendication 1, dans laquelle l'initiateur de polymérisation (D3) ayant un groupe azoïque a une température de demi-vie de 10 heures dans une plage de 60°C à 100°C.

3. Composition de résine de moulage selon la revendication 1 ou 2, dans laquelle l'initiateur de polymérisation (D3) ayant un groupe azoïque est représenté par la formule générale (2) ci-dessous, 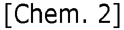 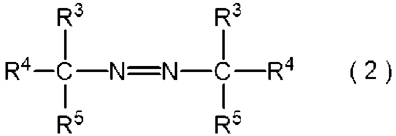 dans la formule générale (2), R³ représente un groupe alkyle, R⁴ représente un groupe alkyle ou un groupe aryle, et R⁵ représente un groupe cyano ou un groupe acétoxy.

4. Composition de résine de moulage selon l'une des revendications 1 à 3, dans laquelle l'ester vinylique (A) est un produit de réaction entre une résine époxy (a1) ayant un équivalent époxy dans une plage de 135 à 500 et l'acide (méth)acrylique (a2).

5. Composition de résine de moulage selon l'une des revendications 1 à 4, dans laquelle le monomère insaturé (B) est un méthacrylate de phénoxyéthyle et/ou un méthacrylate de benzyle.

6. Composition de résine de moulage selon la revendication 4 ou 5, dans laquelle un rapport molaire (COOH/EP) d'un groupe carboxyle (COOH) de l'acide (méth)acrylique (a2) à un groupe époxy (EP) de la résine époxy (a1) est dans une plage de 0,6 à 1,1.

7. Composition de résine de moulage selon l'une des revendications 1 à 6, dans laquelle le polyisocyanate (C) est un polyisocyanate aromatique.

8. Matériau de moulage renforcé par des fibres comprenant la composition de résine de moulage selon l'une des revendications 1 à 7 et une fibre de renforcement (E).

9. Article moulé comprenant le matériau de moulage renforcé par des fibres selon la revendication 8.
